# EUROPÄISCHE PATENTSCHRIFT

(11) **EP 0 989 023 B1**
(45) Veröffentlichungstag und Bekanntmachung des Hinweises auf die Patenterteilung: **20.06.2007**
(21) Anmeldenummer: 99118303.9
(22) Anmeldetag: 15.09.1999
(51) Int. Cl.: B60Q 1/115

(54) **Leuchtweitenregelung für Fahrzeugscheinwerfer**
Headlight beam control for a vehicle
Réglage de la portée des phares d'un véhicule

(30) Priorität: 22.09.1998 DE 19843387
(43) Veröffentlichungstag der Anmeldung: 29.03.2000
(73) Patentinhaber: Hella KGaA Hueck & Co., 59552 Lippstadt (DE)
(72) Erfinder: Krüger, Dietmar, 59558 Lippstadt (DE); Marek, Karsten, 45661 Recklinghausen (DE)

(56) Entgegenhaltungen:
- DE-A- 4 017 856
- DE-A- 19 717 575
- PATENT ABSTRACTS OF JAPAN vol. 1998, no. 09, 31. Juli 1998 (1998-07-31) & JP 10 092207 A (ASMO CO LTD;DENSO CORP), 10. April 1998 (1998-04-10)

## Beschreibung

Die Erfindung betrifft eine Leuchtweitenregelung für Fahrzeugscheinwerfer mit einer Einstelleinrichtung, mittels der die Neigung eines jeden Scheinwerfers, die einer vorgegebenen Leuchtweite entspricht, eingestellt wird, wobei die Einstelleinrichtung einen Schrittmotor aufweist, der entsprechend einem Neigungs-Sollwert positioniert wird, und der Scheinwerfer durch einen Referenzlauf des Schrittmotors in seiner Neigung justiert wird.

Aus der Deutschen Offenlegungsschrift DE 40 17 856 A1 ist eine Vorrichtung zum Einstellen der Leuchtweite eines Kraftfahrzeug-Scheinwerfers vorbekannt. Bei dieser Vorrichtung erfolgt die selbsttätige Einstellung der Leuchtweite des Scheinwerfers mittels eines die Neigung des Scheinwerfers einstellenden Schrittmotors. Diesem Schrittmotor ist ein Schrittzähler zugeordnet. Der Schrittmotor wird, um Schrittverluste, die in der vorherigen Betriebsphase entstanden sein können, auszugleichen, bei oder unmittelbar nach jeder Inbetriebnahme des Kraftfahrzeuges unter Durchführung eines Referenzlaufes in seiner Neigung eingestellt. Diese Justage des Schrittmotors bei jeder Inbetriebnahme des Kraftfahrzeugs bzw. unmittelbar nach jeder Inbetriebnahme des Kraftfahrzeugs führt jedoch zwangsläufig zu Fehleinstellungen der Leuchtweite der Fahrzeugscheinwerfer, wenn während der vorhergehenden Betriebsphase Fehler in der Einrichtung, dem Schrittmotor selbst oder auch an Komponenten aufgetreten sind, durch die der Schrittmotor angesteuert wird. Fehleinstellungen der Scheinwerfer, die zu gefährlichen Situationen durch Blendung des Gegenverkehrs führen können, entstehen aber auch dann, wenn ein Referenzlauf durchgeführt wird und die notwendigen Betriebsparameter zum sicheren Betrieb des Schrittmotors in dem Fahrzeug nicht eingehalten werden.

Der Erfindung liegt somit die Aufgabe zugrunde zu verhindern, daß es zu Fehleinstellungen der Scheinwerfer des Fahrzeugs durch einen Referenzlauf des Schrittmotors kommt.

Die Aufgabe wird erfindungsgemäß durch die Merkmale des Anspruchs 1 gelöst.

Es ist von Vorteil, daß die Durchführung eines Referenzlaufes unterdrückt wird, wenn zu prüfende Betriebsbedingungen und/oder Fehlfunktionen einen zuverlässigen Betrieb des Schrittmotors nicht zulassen, weil somit vermieden wird, daß die Scheinwerfer des Fahrzeugs durch einen nicht korrekt verlaufenden Referenzlauf der Schrittmotoren falsch eingestellt werden und somit gefährliche Situationen, z. B. durch die Blendung des Gegenverkehrs, aufgrund eines Referenzlaufes der Schrittmotoren verhindert werden könnten.

Dadurch daß vor Durchführung eines Referenzlaufes ein Fehlerspeicher auf Einträge überprüft wird, die aufgrund von Fehlfunktionen des Schrittmotors in den Fehlerspeicher eingetragen worden sind, wird sichergestellt, daß aufgrund von Fehlern, die in der vorherigen Betriebsphase des Schrittmotors registriert worden sind und bei deren Auftreten man davon ausgehen kann, daß der Schrittmotor nicht einwandfrei funktioniert, ein Referenzlauf, der zu einer Fehleinstellung der Scheinwerfer führen könnte, nicht durchgeführt wird.

Es ist von Vorteil, daß vor Durchführung eines Referenzlaufes überprüft wird, ob die Versorgungsspannung des Schrittmotors einen vorgegebenen Grenzwert unterschreitet, weil bei einer zu niedrigen Versorgungsspannung Schrittverluste des Schrittmotors auftreten und somit eine falsche Justage der Scheinwerfereinstellung durchgeführt wird, die durch die Unterdrückung des Referenzlaufes vermieden werden kann.

Es erweist sich zudem als vorteilhaft, daß vor Durchführung eines Referenzlaufes überprüft wird, ob die Eingangswerte zur Einstellung der Neigung der Scheinwerfer Fehlfunktionen aufweisen, da auch falsche Eingangssignale bei einem Referenzlauf zu einer falschen Justage der Scheinwerfer führen würden. Hierbei erweist es sich als besonders vorteilhaft, die Sensorsignale von mindestens einem Fahrzeugniveaugeber bzw. die Neigungs-Sollwerte auf Plausibilität zu überprüfen.

Dadurch daß bei Unterdrückung eines Referenzlaufes ein Fehlersignal erzeugt wird, ergibt sich der Vorteil, daß entweder eine Warnung an den Fahrzeugführer ausgegeben werden kann, die ihn über die Fehlfunktion der Leuchtweitenregelung informiert, und/oder die Scheinwerfer in eine Sicherheitsstellung verfahren werden können, die eine Blendung des Gegenverkehrs vermeiden helfen, und/oder für spätere Zwecke ein Fehlersignal zu Diagnosezwecken erzeugt werden kann.

Im folgenden wird der Erfindungsgegenstand kurz auch anhand der einzigen beigefügten Zeichnung beschrieben.

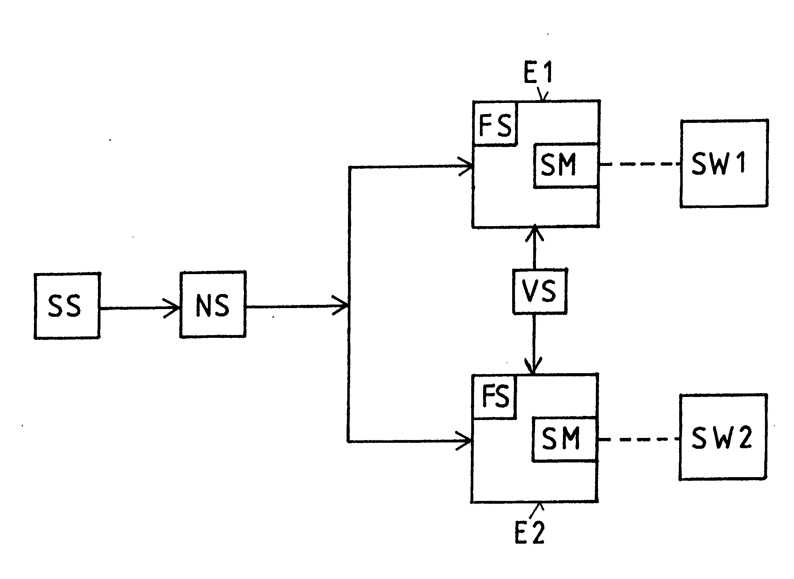

Der einzigen Figur sind, grob skizziert, einige notwendige Strukturen einer Leuchtweitenregelung entnehmbar. Die Leuchtweitenregelung weist dabei mindestens einen Fahrzeugniveaugeber auf, der ein Sensorsignal (SS) erzeugt. Über eine hier nicht gezeigte Auswerteelektronik wird aus dem mindestens einen Sensorsignal, z. B. durch geeignete Filterung unter Nutzung von z. B. fahrdynamischen Parametern wie der Geschwindigkeit und der Beschleunigung, ein Neigungs-Sollwert (NS) erzeugt, der zur Ansteuerung der Scheinwerfer (SW1, SW2) des Fahrzeugs dient. Bei dem hier gezeigten Ausführungsbeispiel werden durch einen Neigungs-Sollwert (NS) zwei Einstelleinrichtungen (E1, E2) mit Neigungs-Sollwerten (NS) versorgt. Die Einstelleinrichtungen (E1, E2) weisen jeweils einen Schrittmotor (SM) auf, wobei jeder Schrittmotor (SM) einen Scheinwerfer (SW1, SW2) in seiner Neigung gemäß der gewünschten Leuchtweite einstellt. Die Einstelleinrichtungen (E1, E2) weisen zudem jeweils einen nicht gezeigten Schrittzähler für den Schrittmotor (SM) auf. Zudem weisen die Einstelleinrichtungen (E1, E2) jeweils einen Fehlerspeicher (FS) auf. Bei anderen Ausführungsbeispielen kann der Fehlerspeicher (FS) auch ein zentrales Element der Auswerteelektronik bzw. Teil eines Mikroprozessors sein. Bei dem hier gezeigten Ausführungsbeispiel werden die Einstelleinrichtungen (E1, E2) wie alle Komponenten der Leuchtweitenregelung, aber insbesondere auch die Schrittmotoren (SM) aus der Versorgungsspannung (VS) des Fahrzeugs mit einer Betriebsspannung versorgt.

Im folgenden wird die Funktion der Leuchtweitenregelung an einem Beispiel näher erläutert.

Zu einem vorgegebenen Zeitpunkt, z. B. wenn die Fahrzeugscheinwerfer (SW1, SW2) eingeschaltet werden, oder aber bei Inbetriebnahme bzw. unmittelbar nach Inbetriebnahme des Fahrzeuges, wird ein Referenzlauf des jeweiligen Schrittmotors (SM) zu Justagezwecken durchgeführt. Durch diesen Referenzlauf soll sichergestellt werden, daß Schrittverluste des Schrittmotors in der vergangenen Betriebsphase ausgeglichen werden und die Leuchtweite der Scheinwerfer entsprechend der Neigung der Scheinwerfer bzw. deren Reflektoren auf die den Neigungs-Sollwerten (NS) vorgegebenen Werten sicher eingestellt werden.

Bevor der Referenzlauf zu dem vorgegebenen Zeitpunkt aktiviert wird, wird erfindungsgemäß überprüft, ob Fehler vorliegen bzw. Betriebsparameter nicht den Vorgaben entsprechen, damit ein Referenzlauf unterdrückt werden kann, der aufgrund von Fehlern oder fehlerhaften Betriebsparametern zu einer Fehleinstellung der Scheinwerfer führen könnte. Dabei wird nach einem allgemein üblichen Systemtest, z. B. bei Verwendung eines Mikroprozessors, eine Abfrage eines Fehlerspeichers (FS) vor Durchführung des Referenzlaufes eingeleitet und ein Referenzlauf unterdrückt, falls Fehler vorliegen. Registrierte Fehler in dem Fehlerspeicher (FS) können dabei z. B. während der vergangenen Betriebsphase registrierte Schrittfehler sein, die einen vorgegebenen Grenzwert überschreiten. Fehler dieser Art können aber auch registrierte Fehler im Bereich der Ansteuerung, der Endstufe, der Verkabelung und des Motors selbst sein. Liegen solche Fehlerbedingungen nicht in dem definierten Ausmaß bzw. gar nicht vor, wird weitergehend überprüft, ob die Versorgungsspannung eine vorgegebene Schrittmotoreinschaltspannungsschwelle unter- bzw. überschritten hat. Hierbei hat es sich als vorteilhaft erwiesen, durch Aktivierung einer Zeitverzögerung einen Referenzlauf erst dann zu starten, wenn die Schrittmotoreinschaltspannungsschwelle überschritten worden ist. Des weiteren hat es sich als vorteilhaft erwiesen, zusätzlich zu überprüfen, ob die Eingangswerte zur Einstellung der Neigung der Scheinwerfer (SW) Fehlfunktionen aufweisen. Diese Eingangswerte können das Sensorsignal (SS) oder aber auch der Neigungs-Sollwert (NS) sein. Erst wenn kein Fehler im Fehlerspeicher detektiert wurde, die Schrittmotoreinschaltspannungsschwelle überschritten worden ist und kein Fehler des Sensorsignales (SS) oder des Neigungs-Sollwertes (NS) vorliegt, wird ein Referenzlauf aktiviert. Wird kein Referenzlauf aktiviert, weil eine der Fehlerbedingungen nicht eingehalten worden ist, kann ein Fehlersignal erzeugt werden, aufgrund dessen ein Warnsignal für den Fahrer erzeugt werden kann, die Scheinwerfer in eine Sicherheitsposition verstellt werden können und/oder das Fehlersignal in einen Fehlerspeicher zu Diagnosezwecken abgespeichert werden kann.

## Patentansprüche

1. Leuchtweitenregelung für Fahrzeugscheinwerfer mit einer Einstelleinrichtung (E), mittels der die Neigung eines jeden Scheinwerfers (SW), die einer vorgegebenen Leuchtweite entspricht, eingestellt wird, wobei die Einstelleinrichtung (E) einen Schrittmotor (SM) aufweist, der entsprechend einem Neigungs-Sollwert (NS) positioniert wird, und der Scheinwerfer (SW) durch einen Referenzlauf des Schrittmotors (SM) in seiner Neigung justiert wird, **dadurch gekennzeichnet, daß** die Durchführung eines Referenzlaufes unterdrückt wird, wenn zu prüfende Betriebsbedingungen und/oder Fehlfunktionen einen zuverlässigen Betrieb des Schrittmotors (SM) nicht zulassen.

2. Leuchtweitenregelung nach Anspruch 1, **dadurch gekennzeichnet, daß** vor Durchführung eines Referenzlaufes ein Fehlerspeicher (FS) auf Einträge überprüft wird, die aufgrund von Fehlfunktionen des Schrittmotors (SM) in den Fehlerspeicher (FS) eingetragen worden sind.

3. Leuchtweitenregelung nach Anspruch 1 oder Anspruch 2, **dadurch gekennzeichnet, daß** vor Durchführung eines Referenzlaufes überprüft wird, ob die Versorgungsspannung (VS) des Schrittmotors (SM) einen vorgegebenen Grenzwert unterschreitet.

4. Leuchtweitenregelung nach einem der vorstehenden Ansprüche, **dadurch gekennzeichnet, daß** vor Durchführung eines Referenzlaufes überprüft wird, ob die Eingangswerte zur Einstellung der Neigung der Scheinwerfer (SW) Fehlfunktionen aufweisen.

5. Leuchtweitenregelung nach Anspruch 4, **dadurch gekennzeichnet, daß** die Eingangswerte die Sensorsignale (SS) von mindestens einem Fahrzeugniveaugeber sind.

6. Leuchtweitenregelung nach Anspruch 4, **dadurch gekennzeichnet, daß** die Eingangswerte die Neigungs-Sollwerte (NS) sind.

7. Leuchtweitenregelung nach einem der vorstehenden Ansprüche, **dadurch gekennzeichnet, daß** bei Unterdrückung eines Referenzlaufes ein Fehlersignal erzeugt wird.

## Claims

1. Vehicle headlamp leveling system with an adjusting device (E) for adjusting the inclination of every headlamp (SW) such that a set light range is produced, where the adjusting device (E) features a stepper motor (SM) which is moved to a position corresponding to a target inclination (NS) and where a reference run of the stepper motor (SM) adjusts the inclination of the headlamp (SW), wherein the reference run is suppressed when a reliable operation of the stepper motor (SM) cannot be assured due to verifiable operating conditions and/or malfunctions.

2. Headlamp leveling system as in claim 1, wherein the reference run is preceded by a read-out of an error memory (FS) to check if the error memory (FS) contains entries made in response to malfunctions of the stepper motor (SM).

3. Headlamp leveling system as in claims 1 or 2, wherein the reference run is preceded by checking whether the power (VS) supplied to the stepper motor (SM) has dropped below a set limit.

4. Headlamp leveling system as in one of the above claims, wherein the reference run is preceded by checking whether the input values for headlamp (SW) inclination adjustment indicate any malfunctions.

5. Headlamp leveling system as in claim 4, wherein the input values are the sensor signals (SS) of at least one level control actuator.

6. Headlamp leveling system as in claim 4, wherein the input values are the same as the target inclination values (NS).

7. Headlamp leveling system as in one of the above claims, wherein a fault signal is generated when the reference run is suppressed.

## Revendications

1. Régulation de portée lumineuse pour projecteur de véhicule avec un dispositif de réglage (E), par l'intermédiaire duquel l'inclinaison d'un projecteur (SW), qui correspond à une portée prédéfinie, est réglée, le dispositif de réglage (E) présentant un moteur pas à pas (SM), qui est positionné selon une valeur théorique d'inclinaison (NS), et le projecteur (SW) étant ajusté dans son inclinaison par une course de référence du moteur pas à pas (SM), **caractérisée en ce que** la réalisation d'une course de référence n'a pas lieu si des conditions de service à contrôler et/ou des anomalies n'autorisent pas un fonctionnement sûr du moteur pas à pas (SM).

2. Régulation de portée lumineuse selon la revendication 1, **caractérisée en ce que**, avant la réalisation d'une course de référence, on vérifie dans une mémoire des défauts (FS) la présence d'entrées qui ont été enregistrées dans la mémoire des défauts (FS) suite à des dysfonctionnements du moteur pas à pas (SM).

3. Régulation de portée lumineuse selon la revendication 1 ou la revendication 2, **caractérisée en ce que**, avant la réalisation d'une course de référence, on vérifie si la tension d'alimentation (VS) du moteur pas à pas (SM) est inférieure à une valeur limite prédéfinie.

4. Régulation de portée lumineuse selon l'une quelconque des revendications précédentes, **caractérisée en ce que**, avant la réalisation d'une course de référence, on vérifie si les valeurs d'entrée pour le réglage de l'inclinaison des projecteurs (SW) présentent des anomalies.

5. Régulation de portée lumineuse selon la revendication 4, **caractérisée en ce que** les valeurs d'entrée sont des signaux de capteur (SS) d'au moins un capteur de niveau de véhicule.

6. Régulation de portée lumineuse selon la revendication 4, **caractérisée en ce que** les valeurs d'entrée sont les valeurs théoriques d'inclinaison (NS).

7. Régulation de portée lumineuse selon l'une quelconque des revendications précédentes, **caractérisée en ce que**, en cas de suppression d'une course de référence, un signal de défaut est généré.
